# EUROPÄISCHE PATENTSCHRIFT

(11) **EP 3 086 080 B1**
(45) Veröffentlichungstag und Bekanntmachung des Hinweises auf die Patenterteilung: **07.11.2018**
(21) Anmeldenummer: 16164345.7
(22) Anmeldetag: 08.04.2016
(51) Int. Cl.: G01B 11/27, G01B 11/24, G01B 5/00, G02B 13/22, G02B 7/02, G02B 7/00

(54) **HALTEVORRICHTUNG FÜR EINE OPTISCHE MESSVORRICHTUNG**
HOLDING DEVICE FOR AN OPTICAL MEASUREMENT DEVICE
SUPPORT POUR UN DISPOSITIF DE MESURE OPTIQUE

(30) Priorität: 20.04.2015 DE 102015105978
(43) Veröffentlichungstag der Anmeldung: 26.10.2016
(73) Patentinhaber: CARL MAHR HOLDING GMBH, 37073 Göttingen (DE)
(72) Erfinder: Lotz, Markus, 99510 Apolda (DE); Heiser, Lars, 07749 Jena (DE); Stepputat, Michael, 99752 Lipprechterode (DE)
(74) Vertreter: Rüger Abel

(56) Entgegenhaltungen:
- EP-A1- 0 619 992
- DE-A1- 19 927 872
- DE-A1-102010 054 742
- DE-C1- 3 531 156
- DE-T2- 69 816 648
- JP-A- H0 497 307
- KR-B1- 101 450 672
- US-A- 4 298 281
- US-A- 5 956 190
- Wikipedia.Com Wikipedia.Com: "Prisma (Geometrie)", , 21 June 2018 (2018-06-21), XP055486872, wikipedia.com Retrieved from the Internet: URL:wikipedia.com [retrieved on 2018-06-21]

## Beschreibung

Die Erfindung betrifft eine Haltevorrichtung für eine optische Messeinrichtung. Die optische Messeinrichtung soll vorzugsweise zur Vermessung von Objekten, insbesondere Wellen eingerichtet sein und insbesondere von solchen Wellen, die Planflächen aufweisen.

DE 103 19 947 A1 beschreibt eine Einrichtung zur Messung der Umfangsgestalt rotationssymmetrischer Werkstücke. Eine Lichtquelle und ein optischer Sensor sind gegenüberliegend relativ zu dem zu messenden Werkstück angeordnet, so dass das Werkstück im Lichtstrahl positioniert werden kann. Auf diese Weise ist eine Durchlichtmessung möglich.

Eine Messeinrichtung zur Durchlichtmessung ist beispielsweise auch in DE 36 30 702 A1 beschrieben. Das Werkstück ist auf einem Schlitten aufspannbar, der entlang der Werkstückachse bewegbar ist. Das Werkstück kann somit entlang seiner Längsachse durch den Lichtweg zwischen einer Strahlungsquelle und einem Strahlungsdetektor bewegt werden und der Schattenwurf erfasst werden. Daraus lassen sich die axialen und radialen Abmessungen des Werkstücks bestimmen.

Bei der in DE 40 30 994 A1 beschriebenen Prüfeinrichtung für rotationssymmetrische Werkstücke ist ein mechanischer Taster sowie eine optische Messeinrichtung vorhanden. Diese liegen sich bezüglich des zu messenden rotationssymmetrischen Werkstücks in Radialrichtung gegenüber. Es wird eine Position für die optische Messeinrichtung so bestimmt, dass das Werkstück bis zur Hälfte in das erzeugte Strahlenband der optischen Messeinrichtung eintaucht. Das Strahlenband ist an der Kontur des Werkstücks parallel zur Tangentialrichtung an der Messstelle ausgerichtet. Dadurch, dass das Werkstück bis zur Hälfte in das Strahlenband eintaucht, soll der Messung der Kontur des Werkstücks an der Stelle mit der schärfsten Abbildung erfolgen und eine genaue Messung ermöglichen.

DE 10 2010 054 742 A1 beschreibt eine Haltevorrichtung für eine Messvorrichtung nach dem Oberbegriff des Patentanspruches 1.

US 4 298 281 beschreibt eine Fluchtungsvorrichtung mit einer Haltevorrichtung. Die Fluchtungsvorrichtung weist einen Lichtsender, ein Sichtgerät und ein Prisma auf, das im Strahlengang zwischen dem Lichtsender und dem Sichtgerät angeordnet ist. Zum Aufstellen dient jeweils ein Dreibein. Mit diesem System können Rollen einer Kühlbahn ausgerichtet werden.

Eine weitere Fluchtungsvorrichtung ist aus DE 35 31 156 C1 bekannt, um die Achsen zweier Halter fluchtend zueinander auszurichten.

JP H04 97307 A offenbart eine Halterung mit zwei Ringen, in denen jeweils drei Lagerschrauben über den Umfang verteilt angeordnet sind und eine Optikeinheit innerhalb des Rings beaufschlagen. Die Ringe sind an einem Träger befestigt. Ähnliche Halterungen sind aus US 5 956 190 und KR 101450567 B1 bekannt.

Eine Messvorrichtung zum Messen eines rotationssymmetrischen Werkzeugs ist in DE 199 27 872 A1 bekannt. Dazu sind eine Lichtquelle und eine Kamer auf einem Drehteller angeordnet und relativ zueinander über Achsen bewegbar. Die Drehachse des Drehtellers Schneidet die Längsachse des zu messenden Werkzeugs. Über die Drehstellung des Drehtellers wird die Neigung der optischen Achse zwischen der Lichtquelle und der Kamera eingestellt, um eine Winkelorientierung der optischen Achse an die Steigung bzw. Verzahnung des zu messenden Werkzeugs anzupassen.

Aus der Praxis sind verschiedene optische Messeinrichtungen zur Vermessung von Wellen bekannt. Die Anmelderin vertreibt beispielsweise optische Messmaschinen des Typs "MarShaft Scope", mit denen Wellen vermessen werden können. Solche optischen Messeinrichtungen können zwei Optikeinheiten haben, nämlich eine Beleuchtungseinheit und eine Empfangseinheit, um beispielsweise im Durchlicht eine Welle oder ein anderes Objekt zu vermessen. Es ist auch bekannt, hierfür telezentrische Optikeinheiten zu verwenden, da bei telezentrischen Optikeinheiten eine Größenbestimmung unabhängig vom Abstand zum Objekt erfolgen kann.

In der Praxis bestehen nach wie vor einige Herausforderungen. Auch bei der Verwendung einer telezentrischen Empfangseinheit und einer telezentrischen Beleuchtungseinheit können Messungenauigkeiten auftreten, die sich insbesondere dann auswirken, wenn eine Längenmessung zwischen zwei Planflächen der Welle erfolgen soll, beispielsweise an einer Planfläche, an der zwei zylindrische Abschnitte der Welle mit unterschiedlichem Durchmesser aneinander stoßen. Eine weitere Herausforderung besteht darin, dass Messfehler entstehen, wenn die optischen Achsen der Optikeinheiten gegeneinander geneigt und/oder zueinander versetzt sind.

Ausgehend von den bekannten Vorrichtungen kann es als Aufgabe der vorliegenden Erfindung angesehen werden, eine Haltevorrichtung für eine optische Messeinrichtung zu schaffen, die zur Verminderung der Messfehler dient und kostengünstig herstellbar ist.

Diese Aufgabe wird durch eine Haltevorrichtung mit den Merkmalen des Patentanspruches 1 gelöst.

Die Haltevorrichtung ist des weiteren gemäß des Patentanspruches 15 zur Verwendung in einer optischen Messeinrichtung eingerichtet. Sie hat wenigstens eine Halteeinheit für jede vorhandene Optikeinheit der Messeinrichtung, also für eine Beleuchtungseinheit und für eine Empfangseinheit. Jede Halteeinheit weist eine erste Lagereinrichtung und eine zweite Lagereinrichtung auf. Die beiden Lagereinrichtungen einer Halteeinheit sind in Richtung einer optischen Achse bzw. einer mechanischen Achse der jeweils betreffenden Optikeinheit mit Abstand zueinander angeordnet. Die mechanische Achse ist eine Längsmittelachse der Optikeinheit, die in der Regel in etwa mit der optischen Achse übereinstimmt.

Jeder Lagereinrichtung hat ein erstes Lagerelement an einer ersten Lagerstelle, ein zweites Lagerelement an einer zweiten Lagerstelle und ein drittes Lagerelement an einer dritten Lagerstelle. Die Lagerstellen sind in Umfangsrichtung um die optische Achse verteilt angeordnet. Der Abstand zwischen den Lagerstellen in Umfangsrichtung kann zwischen unmittelbar benachbarten Lagerstellen unterschiedlich groß sein. Vorzugsweise sind in Umfangsrichtung um die optische Achse pro Lagereinrichtung genau drei Lagerstellen vorhanden, so dass eine eindeutige Lage in Radialrichtung zur optischen Achse ohne Überbestimmung vorgegeben werden kann.

Das erste Lagerelement und das zweite Lagerelement und vorzugsweise auch das dritte Lagerelement sind positionierbar. Zur Positionierung können das erste, das zweite und das dritte Lagerelement zur optischen Achse oder mechanischen Achse hin bzw. von der optischen Achse oder mechanischen Achse weg jeweils entlang einer betreffenden ersten bzw. zweiten bzw. dritten Justageachse bewegt und in der gewünschten Lage fixiert werden. Die erste Justageachse, die zweite Justageachse und dritte Justageachse sind im Wesentlichen rechtwinklig zu der optischen Achse ausgerichtet. Unter der im Wesentlichen rechtwinkeligen Ausrichtung dieser Justageachsen ist zu verstehen, dass der Winkel zwischen der ersten Justageachse oder der zweiten Justageachse oder der dritten Justageachse maximal um einen Betrag von 30° oder 15° oder 10° von einem rechten Winkel abweicht.

Durch diese Anordnung ist es möglich, die optische Einheit mit Hilfe der drei Lagerelemente quer zur optischen Achse zu positionieren. Dadurch, dass die beiden Lagereinrichtungen einer Halteeinheit entlang der optischen Achse oder mechanischen Achse mit Abstand angeordnet sind, kann zusätzlich eine Neigung der optischen Achse der in der Halteeinheit gehaltenen Optikeinheit gegenüber einer Bezugsachse der Messeinrichtung erfolgen, beispielsweise eine optische Achse einer weiteren Optikeinheit, um die das zu vermessende Objekt drehbar gelagert ist. Auf diese Weise ist es möglich, die optische Achse der Optikeinheit mit Hilfe der Halteeinheit gegenüber wenigstens einer anderen Bezugsachse auszurichten. Dadurch lassen sich Messungenauigkeiten aufgrund von Fehlausrichtungen der Optikeinheit verringern. Die maximal mögliche Neigungsverstellung der optischen Achse hängt von dem möglichen Verstellweg der einzelnen Lagerelemente entlang der Justageachsen und dem Abstand der beiden Lagereinrichtungen der Halteeinheit entlang der optischen Achse oder mechanischen Achse ab. Die maximal mögliche Neigungsverstellung kann z.B. 5,2° betragen.

Die Justage mit Hilfe der Lagerelemente ist einfach ausführbar. Beispielsweise können Gewindebolzen als Lagerelemente dienen.

Eine oder mehrere oder alle Justageachsen können im Wesentlichen radial zu der optischen Achse ausgerichtet sein.

Es ist weiter vorteilhaft, wenn die erste Justageachse, die zweite Justageachse und die dritte Justageachse einer Lagereinrichtung in einer gemeinsamen Justageebene angeordnet sind. Dadurch ist sichergestellt, dass das Positionieren der betreffenden Lagerelemente einer Lagereinrichtung auf die Neigung der optischen Achse im Wesentlichen die gleiche Wirkung hat.

Die Justageebenen der Lagereinrichtungen einer Halteeinheit sind bei einem bevorzugten Ausführungsbeispiel parallel zueinander ausgerichtet. Dadurch wird die Justage der Optikeinheit in der Halteeinheit vereinfacht.

Bei einer bevorzugten Ausführungsform hat jede Halteeinheit ein viertes Lagerelement an einer vierten Lagerstelle. Das vierte Lagerelement ist entlang einer vierten Justageachse positionierbar. Die vierte Justageachse ist im Wesentlichen parallel zu der optischen Achse oder mechanischen Achse ausgerichtet. Unter der im Wesentlichen parallelen Ausrichtung ist zu verstehen, dass der Winkel zwischen der vierten Justageachse höchstens 30° oder 15° oder 10° beträgt. Mit Hilfe des entlang der vierten Justageachse positionierbaren vierten Lagerelements kann beispielsweise ein telezentrischer Bereich oder ein Tiefenschärfenbereich der Optikeinheit in Richtung der optischen oder mechanischen Achse positioniert werden. Die maximal mögliche Verstellweg entlang der optischen oder mechanischen Achse kann beispielsweise 4 mm betragen.

Die wenigstens eine Halteeinheit ist um eine im Wesentlichen rechtwinklig zu der optischen Achse ausgerichteten Schwenkachse schwenkbar und in einer Schwenklage feststellbar. Unter der im Wesentlichen rechtwinklig zur optischen Achse verlaufenden Schwenkachse ist zu verstehen, dass der Winkel zwischen der Schwenkachse und der optischen Achse vom rechten Winkel höchstens um 10° oder 5° abweicht. Mittels der Schwenkbarkeit ist erreicht, dass die optische Achse gegenüber einer Bezugsachse rechtwinklig ausgerichtet werden kann. Die Schwenkachse ist vorzugsweise in Richtung der optischen Achse mit Abstand zu den Justageachsen der Halteeinheit angeordnet. Vorzugsweise ist die Schwenkachse parallel zu den Justageebenen ausgerichtet.

Die Haltevorrichtung weist zwei Halteeinheiten für jeweils eine Optikeinheit auf. Die beiden Halteeinheiten sind parallel zu den jeweiligen optischen Achsen betrachtet mit Abstand zueinander angeordnet. Über die beiden Halteeinheiten können die optischen Achsen relativ zueinander ausgerichtet werden. Ziel ist es, die optischen Achsen parallel und vorzugsweise fluchtend auszurichten.

Die beiden Halteeinheiten sind an einem gemeinsamen Tragteil angeordnet. Das Tragteil ist integral ohne Trenn- und Fügestelle ausgeführt. Das Tragteil ist vorzugsweise als Leichtbauteil, insbesondere als Profilkörper ausgeführt. Beispielsweise kann das Tragteil aus einem Strangpressprofil hergestellt sein. Das Tragteil kann aus einem Metall oder einer Metalllegierung bestehen. An seinen beiden Endbereichen weist das Tragteil jeweils eine prismatische Vertiefung auf, die durch zwei Flanken gebildet ist, wobei in der einen Flanke das erste Lagerelement und in der jeweils anderen Flanke das zweite Lagerelement der Lagereinrichtungen entlang der jeweiligen Justageachse positionierbar angeordnet ist.

Zur Realisierung der Schwenkbarkeit der Halteeinheiten ist vorgesehen, dass das Tragteil um die Schwenkachse schwenkbar und in einer gewünschten Schwenklage feststellbar an einem Körper angeordnet ist. Auf diese Weise lassen sich die über die Lagerelemente der Lagereinrichtungen relativ zueinander ausgerichteten und vorzugsweise fluchtenden optischen Achsen der Optikeinheiten gemeinsam schwenken, so dass sie gegenüber einer Bezugsachse eine gewünschte Ausrichtung einnehmen, beispielsweise rechtwinklig zu einer Bezugsachse orientiert sind.

Es ist bevorzugt, wenn der Körper, an dem das Tragteil schwenkbar angeordnet ist, an einer Führungseinrichtung geführt bewegbar gelagert ist. Der Körper kann beispielsweise einen linear bewegbaren Schlitten bilden. Dadurch können beide Messeinheiten mit Hilfe des geführt bewegbaren Körpers gemeinsam entlang einer Bahn, beispielsweise linear bewegt werden.

Vorzugsweise ist zumindest eine und sind insbesondere beide vorhandenen Optikeinheiten jeweils als telezentrische Optikeinheiten ausgeführt. Es ist bevorzugt, wenn die Schwenkachse so angeordnet ist, dass sie den einen telezentrischen Bereich und insbesondere beide telezentrischen Bereiche der telezentrischen Optikeinheit bzw. Optikeinheiten durchsetzt.

Die vorstehend beschriebene Haltevorrichtung ist bevorzugt zur Verwendung in einer optischen Messeinrichtung mit wenigstens einer Optikeinheit und vorzugsweise wenigstens einer telezentrischen Optikeinheit eingerichtet. Die Messeinrichtung ist dazu eingerichtet, eine Planfläche an einem Objekt, vorzugsweise einer Welle zu messen. Die Planfläche verläuft insbesondere schräg oder rechtwinklig zur Längsachse der Welle.

Vorteilhafte Ausführungen der Haltevorrichtung ergeben sich aus den abhängigen Patentansprüchen, der Beschreibung und den Zeichnungen. Nachfolgend werden bevorzugte Ausführungsbeispiele der Erfindung anhand der Zeichnungen im Einzelnen erläutert. Es zeigen:
Fig. 1 eine perspektivische Darstellung eines Ausführungsbeispiels einer optischen Messeinrichtung,
Fig. 2 eine blockschaltbildähnliche Darstellung der Messeinrichtung aus Fig. 1 in einer Ansicht in einer Höhenrichtung,
Fig. 3 eine perspektivische Darstellung eines Ausführungsbeispiels einer Haltevorrichtung der Messeinrichtung gemäß der Fig. 1 und 2,
Fig. 4 eine Ansicht der Haltevorrichtung aus Fig. 3 in einer Längsrichtung in etwa parallel zu den optischen Achsen der Optikeinheiten
Fig. 5 eine schematische, blockschaltbildähnliche Darstellung eines telezentrischen Bereichs der optischen Messeinrichtung gemäß der Fig. 1 und 2 bei der Vermessung einer Welle mit Planflächen und
Figur 6 eine blockschaltbildähnliche Teildarstellung im Bereich einer vierten Lagerstelle einer Lagereinrichtung des Ausführungsbeispiels der Haltevorrichtung.

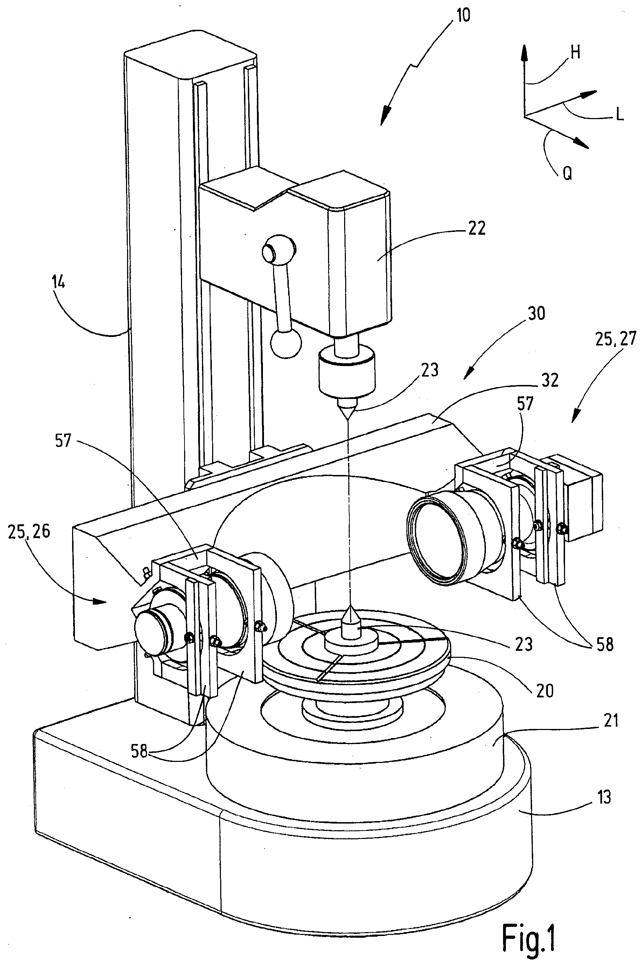

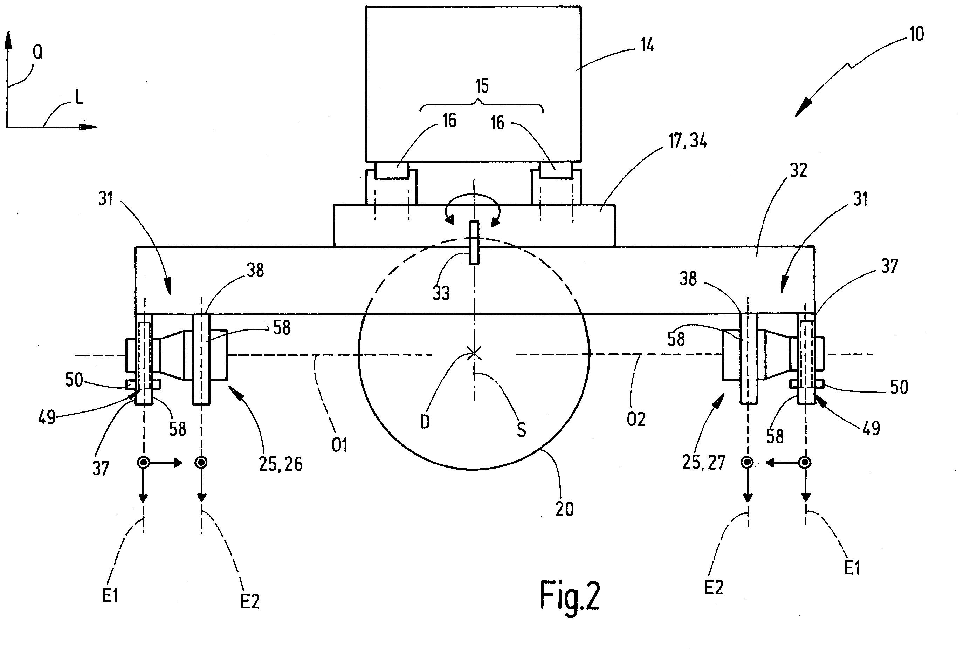

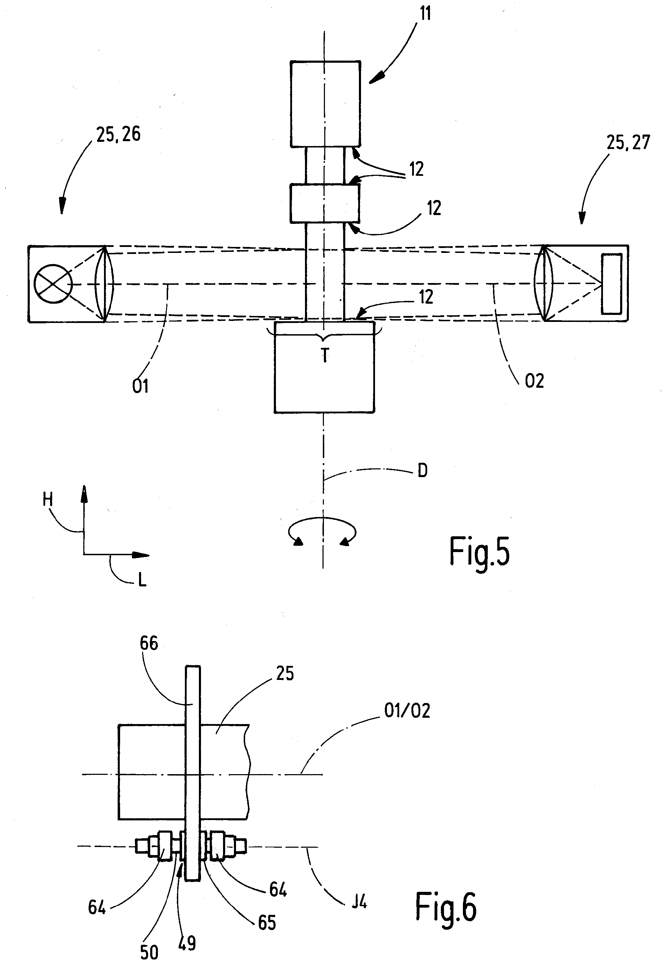

In den Fig. 1 und 2 ist eine Ausführungsform einer optischen Messeinrichtung 10 zur Vermessung von Objekten, beispielsgemäß Wellen 11 und insbesondere von Planflächen 12 an Wellen 11 veranschaulicht. Eine beispielhafte Welle 11 mit Planflächen 12 ist schematisch in Fig. 5 dargestellt. Das zu vermessende Objekt kann, muss aber nicht rotationssymmetrisch sein.

Die optische Messeinrichtung 10 hat bei dem in Fig. 1 und 2 veranschaulichten Ausführungsbeispiel einen Grundkörper 13. An dem Grundkörper 13 ist eine Führungssäule 14 befestigt, die sich ausgehend vom Grundkörper 13 in einer Höhenrichtung H erstreckt. An der Führungssäule 14 ist eine Führungseinrichtung 15 vorhanden, die beispielsgemäß durch zwei parallel zueinander in Höhenrichtung H verlaufende Führungsschienen 16 gebildet ist. An der Führungseinrichtung 15 ist ein Schlitten 17 in Höhenrichtung H verschiebbar geführt angeordnet.

Die Höhenrichtung H, eine Längsrichtung L und eine Querrichtung Q bilden ein kartesisches Koordinatensystem.

An dem Grundkörper 13 ist bei dem hier veranschaulichten Ausführungsbeispiel ein Drehtisch 20 angeordnet, dessen Drehachse D parallel zu der Höhenrichtung H und mithin parallel zur Führungssäule 14 ausgerichtet ist. Der Drehtisch 20 ist über einen Drehantrieb 21 um die Drehachse D antreibbar.

An der Führungssäule 14 ist ein Reitstock 22 manuell und/oder motorisch verschiebbar angeordnet. Zur Messung kann die Welle 11 zwischen dem Reitstock 22 und dem Drehtisch 20 angeordnet und gehalten werden. Hierfür ist beim Ausführungsbeispiel sowohl am Reitstock 22, als auch am Drehtisch 20 jeweils ein Dorn 23 vorhanden. Die Welle 11 kann in entsprechenden stirnseitigen Zentrierbohrungen zwischen den beiden Dornen 23 aufgenommen und drehbar um die Drehachse D gehalten werden.

Die optische Messeinrichtung hat zwei Optikeinheiten 25, die beispielsgemäß als telezentrische Optikeinheiten 25 ausgeführt sind. Eine Optikeinheit 25 ist eine Lichtquelle 26, während die andere Optikeinheit 25 ein Empfänger 27 ist, beispielsweise eine Matrix- oder Zeilenkamera. Die beiden telezentrischen Optikeinheiten 25 sind bezüglich der Drehachse D auf entgegengesetzten Seiten gegenüberliegend angeordnet. Jede Optikeinheit 25 hat eine optische Achse, wobei die optische Achse der Lichtquelle 26 als erste optische Achse O1 und die optische Achse des Empfängers 27 als zweite optische Achse O2 bezeichnet ist (Fig. 2, 3 und 5).

Zur Lagerung und Justierung der beiden Optikeinheiten 25 ist eine Haltevorrichtung 30 vorhanden. Für jede Optikeinheit 25 weist die Haltevorrichtung 30 eine Halteeinheit 31 auf. Die beiden Halteeinheiten 31 sind beim Ausführungsbeispiel an einem gemeinsamen Tragteil 32 angeordnet. Das Tragteil 32 ist beim Ausführungsbeispiel schwenkbar um eine Schwenkachse S gelagert. Die Schwenkachse S erstreckt sich in Querrichtung Q. Das Tragteil 32 erstreckt sich rechtwinkelig zu der Querrichtung Q und kann sich beispielsweise im Wesentlichen in Längsrichtung L erstrecken. Wegen der Schwenkbarkeit kann sich das Tragteil 32 aber auch geneigt zur Längsrichtung L erstrecken.

Die Schwenklagerung des Tragteils 32 um die Schwenkachse S ist in Fig. 2 schematisch veranschaulicht. Ein Schwenkzapfen 33 verbindet das Tragteil 32 mit einem Körper 34, an dem das Tragteil 32 schwenkbar gelagert ist. Der Körper 34 ist beim Ausführungsbeispiel durch den Schlitten 17 gebildet. Durch diese Schwenklagerung des Tragteils 32 können die optischen Achsen O1, O2 der Optikeinheiten 25 gemeinsam um die Schwenkachse S geneigt werden. Dadurch ist es möglich, die optischen Achsen O1, O2 rechtwinklig zu einer Bezugsachse, beispielsweise rechtwinklig zur Drehachse D auszurichten.

In der gewünschten Schwenklage werden das Tragteil 32 und der Körper 34 bzw. der Schlitten 17 relativ zueinander arretiert, so dass die gewünschte Schwenklage beibehalten und beim Betrieb der Messeinrichtung 10 unverändert ist. Die Schwenkbarkeit um die Schwenkachse S dient zur Kalibrierung der Messeinrichtung bei der erstmaligen Inbetriebnahme oder nach einer Reparatur oder Wartung der Messeinrichtung 10. Während des Messbetriebes findet keine Schwenkbewegung um die Schwenkachse S statt.

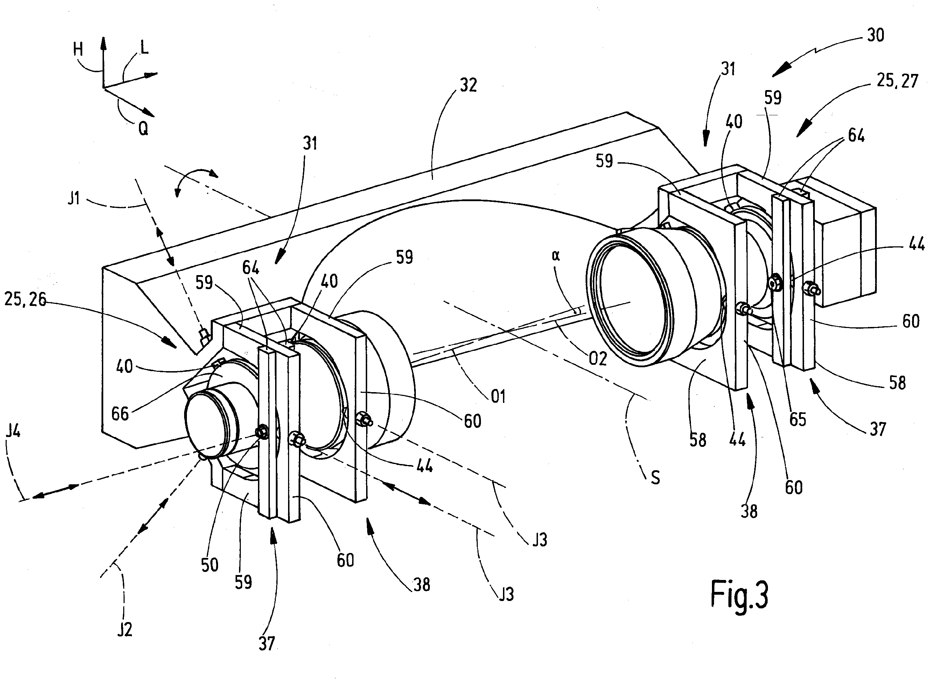

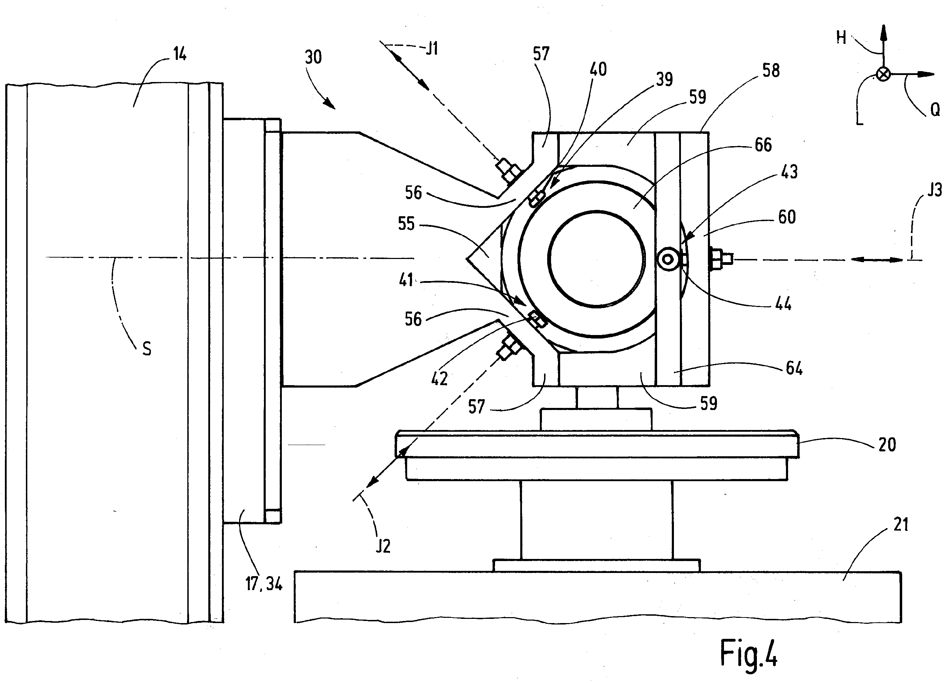

Jede Halteeinheit 31 hat eine erste Lagereinrichtung 37 sowie eine zweite Lagereinrichtung 38. Die beiden Lagereinrichtungen 37, 38 einer Halteeinheit 31 sind in Richtung der betreffenden optischen Achse O1 bzw. O2 mit Abstand zueinander angeordnet. Die Lagereinrichtungen 37, 38 sind insbesondere in den Fig. 3 und 4 genauer zu erkennen. Jede Lagereinrichtung 37, 38 hat an einer ersten Lagerstelle 39 ein erstes Lagerelement 40, an einer zweiten Lagerstelle 41 ein zweites Lagerelement 42 und an einer dritten Lagerstelle 43 ein drittes Lagerelement 44. Zumindest ein Teil der Lagerelemente 40, 42, 44 ist positionierbar. Dadurch lassen sich die jeweiligen Lagerstellen 39, 41, 43 im Raum und beispielsgemäß rechtwinkelig zu der betreffenden optischen Achse O1, O2 verlagern. An jeder Lagerstelle 39, 41, 43 steht das betreffende Lagerelement 40, 42, 44 in Kontakt mit der zugeordneten Optikeinheit 25. Beim Positionieren der Lagerstelle 39, 41, 43 wird somit die Optikeinheit 25 positioniert bzw. justiert.

Beim Ausführungsbeispiel ist das erste Lagerelement 40 entlang einer ersten Justageachse J1, das zweite Lagerelement 42 entlang einer zweiten Justageachse J2 und das dritte Lagerelement 44 entlang einer dritten Justageachse J3 positionierbar. Die Positionierbarkeit der Lagerelemente 40, 42, 44 entlang der betreffenden Justageachse J1, J2, J3 ist durch die Doppelpfeile in den Fig. 3 und 4 und durch die Pfeile in und senkrecht zur Zeichenebene in Fig. 2 veranschaulicht. Die Positionierbarkeit der Lagerelemente 40, 42, 44 entlang der betreffenden Justageachse J1, J2, J3 ist bei allen Lagereinrichtungen 37, 38 vorhanden, auch wenn dies in den Figuren 3 und 4 der Übersichtlichkeit wegen lediglich für jeweils eine erste Lagereinrichtung 37 veranschaulicht ist.

Die erste, die zweite und die dritte Justageachse J1, J2, J3 sind beim Ausführungsbeispiel in jeweils einer gemeinsamen Justageebene angeordnet. Dabei bildet die erste Lagereinrichtung 37 eine erste Justageebene E1 und die zweite Lagereinrichtung 38 eine zweite Justageebene E2. Die beiden Justageebenen E1, E2 sind bei dem hier beschriebenen Ausführungsbeispiel parallel zueinander ausgerichtet.

Wie insbesondere in Fig. 4 zu erkennen ist, schneiden sich die erste, die zweite und die dritte Justageachse J1, J2, J3 beim Ausführungsbeispiel in einem gemeinsamen Punkt, vorzugsweise in der betreffenden optischen Achse O1 bzw. O2.

Die Schwenkachse S verläuft parallel zu den Justageebenen E1, E2. In jeder Justageebene E1, E2 kann die der Halteeinheit 31 zugeordnete Optikeinheit 25 in beide Dimensionen bzw. Freiheitsgraden positioniert werden (Fig. 2). Dadurch kann die betreffende optische Achse O1, O2 relativ zum Tragteil 32 oder zur Schwenkachse S bzw. zur Drehachse D oder einem anderen Bezugsteil der Messeinrichtung 10 geneigt oder gekippt und mithin ausgerichtet werden. Deswegen sind pro Halteeinheit 31 genau zwei Lagereinrichtungen 37, 38 vorhanden.

Da für jede Optikeinheit 25 eine entsprechende Halteeinheit 31 mit jeweils zwei Lagereinrichtungen 37, 38 vorhanden ist, lassen sich die beiden optischen Achsen O1, O2 relativ zueinander und/oder gegenüber wenigstens einer Bezugsachse (beispielsweise Drehachse D) ausrichten. Es ist insbesondere möglich, die beiden optischen Achsen O1, O2 so auszurichten, dass sie parallel zueinander verlaufen und im Idealfall miteinander fluchten. In Fig. 3 ist schematisch und lediglich beispielhaft ein Ausrichtungsfehler der optischen Achsen O1, O2 dargestellt. Diese schneiden sich dort unter einem Winkel a. Nicht ideal ausgerichtete optische Achsen O1, O2 können auch windschief zueinander ohne Schnittpunkt verlaufen. Mit Hilfe der jeweiligen Lagereinrichtungen 37, 38 können diese Ausrichtungsfehler eliminiert oder zumindest reduziert werden.

Bei dem dargestellten Ausführungsbeispiel weist die erste Lagereinrichtung 37 jeweils eine vierte Lagerstelle 49 mit einem vierten Lagerelement 50 auf. An der vierten Lagerstelle 49 hat das vierte Lagerelement 50 Kontakt zur zugeordneten Optikeinheit 25. Das vierte Lagerelement 50 ist entlang einer vierten Justageachse J4 positionierbar. Die vierte Justageachse J4 erstreckt sich im Wesentlichen parallel zu der betreffenden optischen Achse O1 bzw. O2 und beispielsgemäß rechtwinklig zu der Schwenkachse S. Mit Hilfe des positionierbaren vierten Lagerelements 50 kann die Optikeinheit 25 zur Schwenkachse S hin bzw. von der Schwenkachse S weg positioniert werden.

Bei dem hier veranschaulichten bevorzugten Ausführungsbeispiel der Haltevorrichtung 30 sind die Lagerelemente 40, 42, 44, 50 jeweils durch Einstellschrauben gebildet. Sie können durch eine Kontermutter in ihrer jeweiligen Position fixiert werden. Es ist auch möglich, das erste oder das zweite oder das dritte Lagerelement 40, 42, 44 federelastisch in eine Ausgangslage gegen die betreffende Optikeinheit 25 vorzuspannen und entgegen der Kraft einer Vorspannelements bewegbar anzuordnen.

Das Tragteil 32 hat an seinen beiden Endbereichen jeweils eine prismatische Vertiefung 55, die durch zwei, beispielsgemäß rechtwinklig zueinander verlaufende, Flanken 56 gebildet ist. Die Schnittkante, an der sich die beiden Flanken 56 schneiden, ist radial zur Schwenkachse S orientiert. In der einen Flanke 56 ist das erste Lagerelement 40 und in der jeweils anderen Flanke 56 das zweite Lagerelement 42 positionierbar angeordnet, beispielsgemäß über eine arretierbare Gewindeverbindung.

Jede Flanke 56 hat an ihrer freien Endkante einen Befestigungsflansch 57. Die beiden Befestigungsflansche 57 erstrecken sich vorzugsweise in einer gemeinsamen Ebene. An den Befestigungsflanschen kann wenigstens ein Haltebügel 58 befestigt und beispielsweise verschraubt werden. Beispielsgemäß weist jede Lagereinrichtung 37, 38 jeweils einen Haltebügel 58 auf, an dem das dritte Lagerelement 44 positionierbar angeordnet ist. Das dritte Lagerelement 44 kann mit Hilfe einer Schraubverbindung einstellbar und in seiner gewünschten Lage arretierbar am Haltebügel 58 angeordnet sein oder wie oben geschildert federelastisch vorgespannt gegen die Kraft eines Vorspannelements bewegbar gelagert sein.

Der Haltebügel weist eine U- oder V-förmige Gestalt auf. Er hat beim Ausführungsbeispiel zwei parallel zueinander verlaufende Schenkel, deren freie Enden dem jeweiligen Befestigungsflansch 57 zugeordnet sind. Die beiden Schenkel 59 des Haltebügels 58 sind auf der dem Tragteil 32 entgegengesetzten Seite durch ein Verbindungsteil 60 miteinander verbunden.

Beim Ausführungsbeispiel schließen die erste Justageachse J1 und die zweite Justageachse J2 in etwa einen rechten Winkel ein. Der Winkel zwischen der ersten Justageachse oder der zweiten Justageachse J1 bzw. J2 und der dritten Justageachse J3 beträgt jeweils etwa 135°.

An dem Haltebügel 58 der ersten Lagereinrichtung 37 ist zusätzlich wenigstens ein Halteelement und beispielsgemäß zwei Halteelemente 64 angeordnet. Das Haltelement 64 erstreckt sich in etwa parallel zum Verbindungsteil 60 des Haltebügels 58 zwischen den beiden Schenkeln 59. An dem einen Halteelement 64 ist das vierte Lagerelement 50 angeordnet, wobei die Befestigung analog zu den anderen Lagerelementen 40, 42, 44 ausgeführt ist. Das das vierte Lagerelement 50 tragende Halteelement 64 ist beispielsgemäß auf der Seite des Haltebügels 58 der ersten Lagereinrichtung 37 angeordnet, die der zweiten Lagereinrichtung 38 derselben Halteeinheit 31 abgewandt ist. Das beispielsgemäß vorhandene weitere Halteelement 64 ist auf der gegenüberliegenden Seite des Haltebügels 58 auf der der zweiten Lagereinrichtung 38 zugewandten Seite angeordnet. Dort kann ein entlang der vierten Justageachse J4 verstellbarer Anschlag 65 angeordnet sein.

Diese Anordnung ist stark schematisiert in Fig. 6 veranschaulicht. Zur besseren Übersicht ist dort der Haltebügel 58 nicht dargestellt, sondern lediglich die beiden Halteelemente 64. Die optische Einheit 25 weist beispielsgemäß einen Ringflansch 66 auf, der abschnittsweise zwischen den beiden Halteelementen 64 verläuft. Der Ringflansch 66 kann dadurch einerseits durch das vierte Lagerelement 50 und andererseits durch den Anschlag 65 beaufschlagt werden. Dadurch lässt sich die Axialposition der Optikeinheit 25 entlang der vierten Justageeinheit J4 bzw. entlang der betreffenden optischen Achse O1 bzw. O2 einstellen und fixieren. Der Anschlag 65 kann analog zu den Lagerelementen 50 über eine Gewindeverbindung am Halteelement 64 einstellbar gehalten und in seiner gewünschten Lage fixierbar sein, beispielsweise über eine Kontermutter, wie dies auch bei den Lagerelementen 40, 42, 44, 50 der Fall ist.

An dem Ringflansch 66 können auch das erste Lagerelement 40, das zweite Lagerelement 42 und das dritte Lagerelement 44 der ersten Lagereinrichtung 37 angreifen.

In Fig. 5 ist stark schematisiert die Vermessung einer Welle 11 durch die Messeinrichtung 10 veranschaulicht, wobei lediglich die beiden Optikeinheiten 25 dargestellt sind. Über die jeweils zugeordnete Halteeinheit 31 werden die beiden Optikeinheiten 25 relativ zueinander ausgerichtet, so dass die beiden optischen Achsen O1, O2 parallel zueinander verlaufen und vorzugsweise ohne Versatz miteinander fluchten. Außerdem werden die beiden optischen Achsen O1, O2 so um die Schwenkachse S geschwenkt, dass sie rechtwinklig zu der Drehachse D ausgerichtet sind.

Durch das Verschieben der Optikeinheiten 25 entlang der betreffenden optischen Achse O1, O2 kann ein telezentrischer Bereich T um die Drehachse D herum angeordnet werden. In dem telezentrischen Bereich T sind die Lichtstrahlen, die von der Lichtquelle 26 abgestrahlt werden, ausreichend parallel zueinander, so dass eine dimensionelle Messung mit der erforderlichen Genauigkeit ausgeführt werden kann. Dies ermöglicht auch das Messen von Planflächen 12 an einer Welle 11, die im Wesentlichen rechtwinklig zu der Drehachse D ausgerichtet sind.

Durch die Verwendung der Haltevorrichtung 30 bei einer Messeinrichtung 10, die zur Messung von Wellen 11 und daran vorhandenen Planflächen 12 eingerichtet ist, können die Messfehler durch eine fehlerhafte Ausrichtung der Optikeinheiten 25 minimiert werden. Die optische Achse O1 an der Lichtquelle 26 und die optische Achse O2 eines Empfängers 27 lassen sich zueinander ausrichten und fluchten idealerweise. Außerdem kann der telezentrische Bereich T, der sich in etwa mittig zwischen der Lichtquelle 26 und dem Empfänger 27 mit der geringsten telezentrischen Abweichung einstellt, durch das Positionieren der Lichtquelle 26 und/oder des Empfängers 27 entlang der betreffenden optischen Achse O1, O2 um die Drehachse D bzw. die zu messende Welle herum anordnen.

Die Erfindung betrifft eine Haltevorrichtung 30 für eine optische Messeinrichtung 10. Die Haltevorrichtung 30 hat zwei Halteeinheiten 31 für zwei vorzugsweise telezentrische Optikeinheiten 25 der Messeinrichtung 10. Jede Halteeinheit 31 hat eine erste Lagereinrichtung 37 und eine zweite Lagereinrichtung 38. Die beiden Lagereinrichtungen 37, 38 haben in Richtung einer optischen Achse O1, O2 der Optikeinheit einen Abstand zueinander. An jeder Lagereinrichtung 37, 38 ist eine Dreipunktlagerung durch drei Lagerelemente 40, 42, 44 für die zugeordnete Optikeinheit 25 vorhanden. Zumindest zwei der Lagerelemente 40, 42, 44 lassen sich entlang einer betreffenden Justageachse J1, J2, J3 positionieren. Die Justageachsen J1, J2, J3 verlaufen im Wesentlichen rechtwinklig zur betreffenden optischen Achse O1, O2. Dadurch kann die Optikeinheit 25 in einer durch die Justageachsen J1, J2, J3 aufgespannten Ebene verschoben und aufgrund der zwei beabstandeten Lagereinrichtungen 37, 38 geneigt bzw. gekippt werden. Das Verschieben rechtwinkelig zu der betreffenden optischen Achse O1, O2 erfolgt durch gleiches Verstellen der Lagerelemente 40, 42, 44 entlang der Justageachsen J1, J2, J3 an beiden Lagereinrichtungen 37, 38.

### Bezugszeichenliste:

- 10: optische Messeinrichtung
- 11: Welle
- 12: Planfläche
- 13: Grundkörper
- 14: Führungssäule
- 15: Führungseinrichtung
- 16: Führungsschiene
- 17: Schlitten

- 20: Drehtisch
- 21: Drehantrieb
- 22: Reitstock
- 23: Dorn

- 25: Optikeinheit
- 26: Lichtquelle
- 27: Empfänger

- 30: Haltevorrichtung
- 31: Halteeinheit
- 32: Tragteil
- 33: Schwenkzapfen
- 34: Körper

- 37: erste Lagereinrichtung
- 38: zweite Lagereinrichtung
- 39: erste Lagerstelle
- 40: erstes Lagerelement
- 41: zweite Lagerstelle
- 42: zweites Lagerelement
- 43: dritte Lagerstelle
- 44: drittes Lagerelement

- 49: vierten Lagerstelle
- 50: viertes Lagerelement

- 55: Vertiefung
- 56: Flanke
- 57: Befestigungsflansch
- 58: Haltebügel
- 59: Schenkel
- 60: Verbindungsteil

- 64: Halteelement
- 65: Anschlag
- 66: Ringflansch

- α: Winkel
- E1: erste Justageebene
- E2: zweite Justageebene
- H: Höhenrichtung
- J1: erste Justageachse
- J2: zweite Justageachse
- J3: dritte Justageachse
- J4: vierte Justageachse
- L: Längsrichtung
- O1: erste optische Achse
- O2: zweite optische Achse
- Q: Querrichtung
- T: telezentrischer Bereich

## Patentansprüche

1. Haltevorrichtung (30) für eine optische Messeinrichtung (10),
mit einem Tragteil (32) und einem Körper (34), wobei das Tragteil (32) um eine Schwenkachse (S) schwenkbar und in einer Schwenklage feststellbar am Körper (34) angeordnet ist und wobei das Tragteil (32) integral ohne Trenn- und Fügestelle ausgeführt ist, mit zwei Halteeinheiten (31) für jeweils eine Optikeinheit (25) der Messeinrichtung (10), wobei die Optikeinheiten (25) jeweils eine optische Achse (O1, O2) aufweisen, wobei die beiden Halteeinheiten (31) parallel zu den jeweiligen optischen Achsen (O1, O2) der Optikeinheiten (25) betrachtet mit Abstand zueinander angeordnet sind, wobei die beiden Halteeinheiten (31) an diesem gemeinsamen Tragteil (32) angeordnet sind,
**dadurch gekennzeichnet, dass** jede Halteeinheit (31) eine erste Lagereinrichtung (37) und eine zweite Lagereinrichtung (38) aufweist, die in Richtung der jeweiligen optischen Achse (O1, O2) der jeweiligen Optikeinheit (25) mit Abstand zueinander angeordnet sind,
dass jede Lagereinrichtung (37, 38) ein erstes Lagerelement (40) an einer ersten Lagerstelle (39), ein zweites Lagerelement (42) an einer zweiten Lagerstelle (41) und ein drittes Lagerelement (44) an einer dritten Lagerstelle (43) aufweist,
dass das erste Lagerelement (40) entlang einer ersten Justageachse (J1) und das zweite Lagerelement (42) entlang einer zweiten Justageachse (J2) positionierbar sind und wobei die erste Justageachse (J1) und die zweite Justageachse (J2) im Wesentlichen rechwinkelig zu einer optischen Achse (O1, O2) verlaufen,
und dass das integral ohne Trenn- und Fügestelle ausgeführte Tragteil (32) an seinen beiden Endbereichen jeweils eine prismatische Vertiefung (55) aufweist, die durch zwei Flanken (56) gebildet ist, wobei in der einen Flanke (56) das erste Lagerelement (40) und in der jeweils anderen Flanke (56) das zweite Lagerelement (42) der Lagereinrichtungen (37, 38) entlang der jeweiligen Justageachse (J1, J2) positionierbar angeordnet ist.

2. Haltevorrichtung nach Anspruch 1,
**dadurch gekennzeichnet, dass** das dritte Lagerelement (44) entlang einer dritten Justageachse (J3) positionierbar ist.

3. Haltevorrichtung nach Anspruch 1 oder 2,
**dadurch gekennzeichnet, dass** zumindest die erste, zweite oder dritte Justageachse (J1, J2, J3) im Wesentlichen radial zu der optischen Achse (O1, O2) ausgerichtet ist.

4. Haltevorrichtung nach einem der vorhergehenden Ansprüche,
**dadurch gekennzeichnet, dass** die Schnittkante, an der sich die beiden Flanken (56) schneiden, radial zur Schwenkachse (S) orientiert ist.

5. Haltevorrichtung nach einem der vorhergehenden Ansprüche,
**dadurch gekennzeichnet, dass** jede Flanke (56) an ihrer freien Endkante einen Befestigungsflansch (57) hat, und dass an den Befestigungsflanschen (57) wenigstens ein Haltebügel (58) befestigt ist, an dem das dritte Lagerelement (44) positionierbar angeordnet ist.

6. Haltevorrichtung nach einem der vorhergehenden Ansprüche,
**dadurch gekennzeichnet, dass** die erste Justageachse (J1) und die zweite Justageachse (J2) einer Lagereinrichtung (37, 38) in einer gemeinsamen Justageebene (E1, E2) angeordnet sind.

7. Haltevorrichtung nach Anspruch 6,
**dadurch gekennzeichnet, dass** die beiden Justageebenen (E1, E2) einer Halteeinheit (31) parallel zueinander ausgerichtet sind.

8. Haltevorrichtung nach einem der vorhergehenden Ansprüche,
**dadurch gekennzeichnet, dass** jede Halteeinheit (31) ein viertes Lagerelement (50) an einer vierten Lagerstelle (49) aufweist, das entlang einer vierten Justageachse (J4) positionierbar ist, die im Wesentlichen parallel zu der optischen Achse (O1, O2) ausgerichtet ist.

9. Haltevorrichtung nach Anspruch 5 und nach Anspruch 8, **dadurch gekennzeichnet, dass** am Haltebügel (58) der ersten Lagereinrichtung (37) wenigstens ein Haltelement (64) angeordnet ist, an dem das vierte Lagerelement (50) angeordnet ist.

10. Haltevorrichtung nach Anspruch 9,
**dadurch gekennzeichnet, dass** der Haltebügel (58) zwei parallel zueinander verlaufende Schenkel (59) hat, deren freie Enden dem jeweiligen Befestigungsflansch (57) zugeordnet sind, und dass die beiden Schenkel (59) auf der dem Tragteil (32) entgegengesetzten Seite durch ein Verbindungsteil (60) miteinander verbunden sind, und dass sich das wenigstens eine Halteelement (64) im Wesentlichen parallel zum Verbindungsteil (60) zwischen den beiden Schenkeln (59) des Haltebügels (58) erstreckt.

11. Haltevorrichtung nach einem der vorhergehenden Ansprüche,
**dadurch gekennzeichnet, dass** wenigstens eine Optikeinheit (25) telezentrisch ist und entlang eines Abschnitts der optischen Achse (O1, O2) einen telezentrischen Bereich (T) aufweist.

12. Haltevorrichtung nach Anspruch 11,
**dadurch gekennzeichnet, dass** die Schwenkachse (S) im Wesentlichen rechtwinklig zu der optischen Achse (O1, O2) ausgerichtet ist und den wenigstens einen telezentrischen Bereich (T) durchsetzt.

13. Haltevorrichtung nach einem der vorhergehenden Ansprüche,
**dadurch gekennzeichnet, dass** die Schwenkachse (S) in Richtung der optischen Achse (O1, O2) mit Abstand zu der ersten Justageachse (J1) und der zweiten Justageachse (J2) angeordnet ist.

14. Haltevorrichtung nach einem der vorhergehenden Ansprüche,
**dadurch gekennzeichnet, dass** der Körper (34) geführt bewegbar an einer Führungseinrichtung (15) gelagert ist.

15. Verwendung der Haltevorrichtung nach einem der vorhergehenden Ansprüche in einer optischen Messeinrichtung (10) mit wenigstens einer Optikeinheit (25), die dazu eingerichtet ist eine Planfläche (12) an einem Objekt (11) zu messen.

## Claims

1. Holding device (30) for an optical measuring device (10),
with a carrier part (32) and a body (34), wherein the carrier part (32) is arranged so as to be pivotable about a pivot axis (S) and fixable in a pivot position on the body (34), and wherein the carrier part (32) is formed integrally without separating and joining points,
with two holding units (31) each for an optic unit (25) of the measuring device (10), wherein the optic units (25) each have an optical axis (O1, O2), wherein the two holding units (31) are arranged spaced apart from each other viewed parallel to the respective optical axis (O1, O2) of the optic units (25), wherein the two holding units (31) are arranged on this common carrier part (32),
**characterised in that** each holding unit (31) has a first bearing device (37) and a second bearing device (38) which are arranged spaced apart from each other in the direction of the respective optical axis (O1, O2) of the respective optic unit (25),
that each bearing device (37, 38) has a first bearing element (40) at a first bearing point (39), a second bearing element (42) at a second bearing point (41), and a third bearing element (44) at a third bearing point (43),
that the first bearing element (40) is positionable along a first adjustment axis (J1), and the second bearing element (42) is positionable along a second adjustment axis (J2), and wherein the first adjustment axis (J1) and the second adjustment axis (J2) run substantially at right angles to an optical axis (O1, O2),
and that the carrier part (32), which is formed integrally without separating and joining points, has, at each of its two end regions, a prismatic depression (55) formed by two flanks (56), wherein the first bearing element (40) of the bearing devices (37, 38) is arranged in the one flank (56) and the second bearing element (42) in the other flank (56) so as to be positionable along the respective adjustment axis (J1, J2).

2. Holding device according to claim 1, **characterised in that** the third bearing element (44) is positionable along a third adjustment axis (J3).

3. Holding device according to claim 1 or 2, **characterised in that** at least the first, second or third adjustment axis (J1, J2, J3) is oriented substantially radially to the optical axis (O1, O2).

4. Holding device according to any of the preceding claims, **characterised in that** the cutting edge at which the two flanks (56) intersect is oriented radially to the pivot axis (S).

5. Holding device according to any of the preceding claims, **characterised in that** each flank (56) has a fixing flange (57) at its free end edge, and that on the fixing flanges (57), at least one holding bracket (58) is provided on which the third bearing element (44) is arranged in a positionable fashion.

6. Holding device according to any of the preceding claims, **characterised in that** the first adjustment axis (J1) and the second adjustment axis (J2) of a bearing device (37, 38) are arranged in a common adjustment plane (E1, E2).

7. Holding device according to claim 6, **characterised in that** the two adjustment planes (E1, E2) of a holding unit (31) are oriented parallel to each other.

8. Holding device according to any of the preceding claims, **characterised in that** each holding unit (31) has a fourth bearing element (50) at a fourth bearing point (49) which is arranged so as to be positionable along a fourth adjustment axis (J4) which is oriented substantially parallel to the optical axis (O1, O2).

9. Holding device according to claim 5 and claim 8, **characterised in that** at least one holding element (64), on which the fourth bearing element (50) is arranged, is provided on the holding bracket (58) of the first bearing device (37).

10. Holding device according to claim 9, **characterised in that** the holding bracket (58) has two legs (59) running parallel to each other, the free ends of which are assigned to the respective fixing flange (57), and that the two legs (59) are connected together by a connecting piece (60) on the side opposite the carrier part (32), and that the at least one holding element (64) extends substantially parallel to the connecting piece (60) between the two legs (59) of the holding bracket (58).

11. Holding device according to any of the preceding claims, **characterised in that** at least one optic unit (25) is telecentric and has a telecentric region (T) along a portion of the optical axis (O1, O2).

12. Holding device according to claim 11, **characterised in that** the pivot axis (S) is oriented substantially at right angles to the optical axis (O1, O2) and passes through the at least one telecentric region (T).

13. Holding device according to any of the preceding claims, **characterised in that** the pivot axis (S) is arranged spaced from the first adjustment axis (J1) and from the second adjustment axis (J2) in the direction of the optical axis (O1, O2).

14. Holding device according to any of the preceding claims, **characterised in that** the body (34) is mounted so as to be guided movably on a guide device (15).

15. Use of the holding device according to any of the preceding claims in an optical measuring device (10) with at least one optic unit (25) which is configured to measure a planar surface (12) on an object (11).

## Revendications

1. Dispositif de support (30) pour un dispositif de mesure optique (10),
comprenant un élément porteur (32) et un corps (34), l'élément porteur (32) étant disposé sur le corps (34) avec possibilité de pivotement autour d'un axe de pivotement (S) et avec possibilité d'immobilisation dans une position de pivotement, et l'élément porteur (32) étant réalisé d'une seule pièce, sans point de jonction ni d'assemblage,
comprenant deux unités de support (31) respectivement pour une unité optique (25) du dispositif de mesure (10), les unités optiques (25) présentant chacune un axe optique (O1, O2), les deux unités de support (31) étant disposées à distance l'une de l'autre, vu parallèlement aux axes optiques (O1, O2) respectifs des unités optiques (25), les deux unités de support (31) étant disposées sur cet élément porteur (32) commun,
**caractérisé en ce que** chaque unité de support (31) présente un premier dispositif d'appui (37) et un deuxième dispositif d'appui (38), qui sont installés à distance l'un de l'autre, dans la direction de l'axe optique (O1, O2) respectif de l'unité optique (25) respective,
**en ce que** chaque dispositif d'appui (37, 38) présente un premier élément d'appui (40) en un premier point d'appui (39), un deuxième élément d'appui (42) en un deuxième point d'appui (41) et un troisième élément d'appui (44) en un troisième point d'appui (43),
**en ce que** le premier élément d'appui (40) peut être positionné le long d'un premier axe d'ajustage (J1) et le deuxième élément d'appui (42) peut être positionné le long d'un deuxième axe d'ajustage (J2), et le premier axe d'ajustage (J1) et le deuxième axe d'ajustage (J2) s'étendant de façon sensiblement à angle droit par rapport à un axe optique (O1, O2),
et **en ce que** l'élément porteur (32) réalisé d'une seule pièce, sans point de jonction ni d'assemblage, présente dans ses deux parties d'extrémité, respectivement un évidement (55) prismatique qui est formé par deux flancs (56), sachant que le premier élément d'appui (40) des dispositifs d'appui (37, 38) est placé dans un flanc (56) et le deuxième élément d'appui (42) est placé dans l'autre flanc (56) respectif, de façon positionnable le long de l'axe d'ajustage (J1, J2) respectif.

2. Dispositif de support selon la revendication 1, **caractérisé en ce que** le troisième élément d'appui (44) peut être positionné le long d'un troisième axe d'ajustage (J3).

3. Dispositif de support selon la revendication 1 ou 2, **caractérisé en ce qu'**au moins le premier, le deuxième ou le troisième axe d'ajustage (J1, J2, J3) sont orientés de façon sensiblement radiale par rapport à l'axe optique (O1, O2).

4. Dispositif de support selon une des revendications précédentes, **caractérisé en ce que** la ligne d'intersection, où les deux flancs (56) se croisent, est orientée radialement par rapport à l'axe de pivotement (S).

5. Dispositif de support selon une des revendications précédentes, **caractérisé en ce que** chaque flanc (56) présente une bride de fixation (57) sur son bord d'extrémité libre, et **en ce qu'**au moins un étrier de support (58) est fixé aux brides de fixation (57), sur lequel le troisième élément d'appui (44) est disposé de façon positionnable.

6. Dispositif de support selon une des revendications précédentes, **caractérisé en ce que** le premier axe d'ajustage (J1) et le deuxième axe d'ajustage (J2) d'un dispositif d'appui (37, 38) sont disposés dans un plan d'ajustage (E1, E2) commun.

7. Dispositif de support selon la revendication 6, **caractérisé en ce que** les deux plans d'ajustage (E1, E2) d'une unité de support (31) sont orientés parallèlement l'un à l'autre.

8. Dispositif de support selon une des revendications précédentes, **caractérisé en ce que** chaque unité de support (31) présente un quatrième élément d'appui (50) en un quatrième point d'appui (49), qui peut être positionné le long d'un quatrième axe d'ajustage (J4), lequel est orienté sensiblement parallèlement à l'axe optique (O1, O2).

9. Dispositif de support selon la revendication 5 et selon la revendication 8, **caractérisé en ce que** sur l'étrier de support (58) du premier dispositif d'appui (37), il est prévu au moins un élément de support (64) sur lequel est disposé le quatrième élément d'appui (50).

10. Dispositif de support selon la revendication 9, **caractérisé en ce que** l'étrier de support (58) comporte deux bras (59) qui s'étendent parallèlement l'un à l'autre et dont les extrémités libres sont associées à la bride de fixation (57) respective, et **en ce que** les deux bras (59) sont reliés l'un à l'autre par un élément de liaison (60), sur le côté opposé à l'élément porteur (32), et **en ce que** l'élément de support (64), au nombre d'au moins un, s'étend de façon sensiblement parallèle à l'élément de liaison (60), entre les deux bras (59) de l'étrier de support (58).

11. Dispositif de support selon une des revendications précédentes, **caractérisé en ce qu'**au moins une unité optique (25) est télécentrique et présente une zone télécentrique (T) le long d'une portion de l'axe optique (O1, O2).

12. Dispositif de support selon la revendication 11, **caractérisé en ce que** l'axe de pivotement (S) est orienté sensiblement à angle droit par rapport à l'axe optique (O1, O2) et traverse la zone télécentrique (T), au nombre d'au moins une.

13. Dispositif de support selon une des revendications précédentes, **caractérisé en ce que**, en direction de l'axe optique (O1, O2), l'axe de pivotement (S) est disposé à distance du premier axe d'ajustage (J1) et du deuxième axe d'ajustage (J2).

14. Dispositif de support selon une des revendications précédentes, **caractérisé en ce que** le corps (34) est monté sur un dispositif de guidage (15) avec possibilité de déplacement guidé.

15. Utilisation du dispositif de support selon une des revendications précédentes, dans un dispositif de mesure optique (10) comprenant au moins une unité optique (25) qui est conçue pour mesurer une surface plane (12) sur un objet (11).
